# EUROPEAN PATENT SPECIFICATION

(11) **EP 3 960 712 B1**
(45) Date of publication and mention of the grant of the patent: **04.12.2024**
(21) Application number: 21170008.3
(22) Date of filing: 13.12.2014
(51) Int. Cl.: C02F 1/32

(54) **UV REACTOR**
UV-REAKTOR
RÉACTEUR UV

(30) Priority: 14.12.2013 US 201361916155 P
(43) Date of publication of application: 02.03.2022
(62) Divisional of application: 14838920.8
(73) Proprietor: Evoqua Water Technologies Limited, Portskewett, Caldicot, Wales NP26 5PT (GB)
(72) Inventor: JOSHI, Richard, Wigan, WN5 8AA (GB)
(74) Representative: Murgitroyd & Company

(56) References cited:
- EP-A1- 2 368 852
- WO-A1-2004/033375
- FR-A1- 2 880 014
- US-A1- 2010 258 508
- US-A1- 2013 062 532

## Description

### BACKGROUND AND SUMMARY

The present invention relates generally to fluid treatment systems and specifically to UV fluid treatment systems.

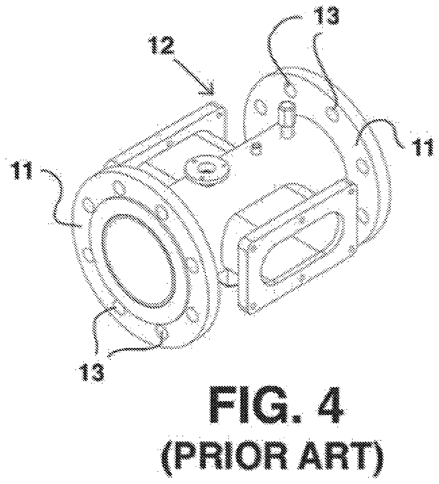

The present invention replaces standard UV system designs which have heretofore consisted of a chamber body with flanges at either end for connection to cooperating flanges of existing piping systems. FIG. 4 depicts a perspective view of a prior art reactor 12 with flanges 11 having flange mounting holes 13. Such a reactor is incorporated into an existing piping system 9 such as is depicted in the various figures wherein flange 11 is aligned with flange 6 and secured with bolts (not shown). Fluid treatment systems mounted between flanges of existing piping systems known in the prior art are to be found in US 2013/062532 A1, EP 2 368 852 A1, US 2010/258508 A1, FR 2 880 014 A1 and WO 2004/033375 A1.

The present invention can be generally analogized to a butterfly valve that is mounted in between flanges of a piping system, that has no flange of its own. Thus, the flanges are eliminated. Additionally, multiple reactors can be cascaded with their lamp axis rotated about a longitudinal reactor axis, with respect to each other. Reactor mounting holes are aligned with the flange mounting holes of the existing piping system.

Such a configuration also has the advantage of allowing post-installation changes to be made without any additional hardware. Mounting bolts are removed, the reactors re-aligned, and then the mounting bolts are re-inserted.

Additional advantages of the present invention include: reduced installation space required. E.g. a 76.2 cm (30 inch) reactor is approximately 300mm wide compared to 1300mm; lower fabrication (Casting possible) costs; the ability to utilize the installation piping as part of an "effective reactor" - so to speak; improved UV water treatment due to the ability to vary lamp configurations. e.g. multiple reactors can be used with lamps being rotated with respect to each other to achieve greater flexibility. Other objects and advantages will be apparent to those of skill in the art.

### BRIEF DESCRIPTION OF THE DRAWINGS

FIG. 1A depicts a perspective view of a single reactor 1 retrofitted into piping system 9 in accordance with one embodiment of the invention.
FIG. 1B depicts a perspective view of multiple reactors 1, 17 retrofitted into piping system 9 in accordance with one embodiment of the invention.
FIG. 1C depicts a perspective view of single reactor 1

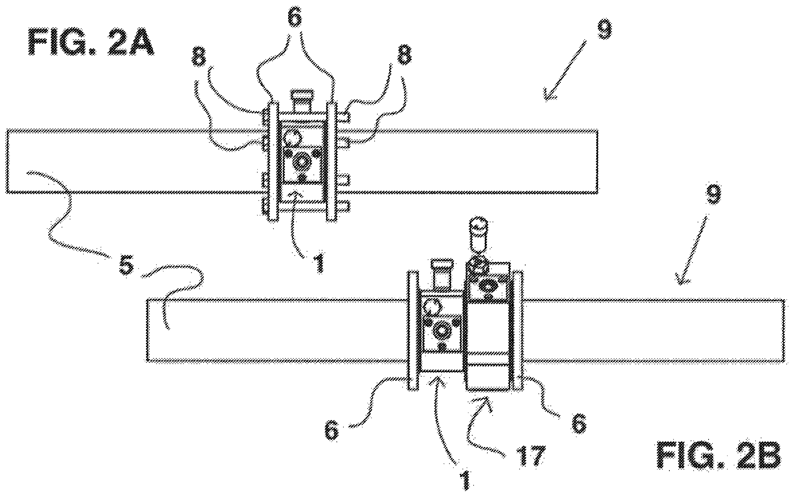

FIG. 2A depicts a side view of a single reactor 1 retrofitted into piping system 9 in accordance with one embodiment of the invention.
FIG. 2B depicts a side view of multiple reactors 1, 17 retrofitted into piping system 9 in accordance with one embodiment of the invention.
FIG. 3A depicts a sectional view of line A-A of FIG. 3B
FIG. 3B depicts a side view of the reactor in one embodiment
FIG. 3C depicts a front view of the reactor in one embodiment
FIG. 3D depicts a sectional view of line B-B of FIG. 3C
FIG. 3E depicts a sectional view of line C-C of FIG. 3C
FIG. 4 depicts a perspective view of a prior art reactor 12 with flanges 11 having flange mounting holes 13.
FIG. 5A depicts a frontal view of reactor 1A of an alternative embodiment of the invention.
FIG. 5B depicts a side view of reactor 1A of an alternative embodiment of the invention.
FIG. 5C depicts a perspective view of reactor 1A of an alternative embodiment of the invention.

### REFERENCE NUMERALS IN DRAWINGS

The table below lists the reference numerals employed in the figures, and identifies the element designated by each numeral.
- 1: reactor 1
- 2: lamp 2 a.k.a "light source", "radiation source"
- 3: port 3
- 4: ancillary device 4 a.k.a. UV sensor, or wiper.
- 5: pipe 5
- 6: pipe flange 6
- 7: pipe flange mounting holes 7
- 8: pipe flange mounting bolts 8
- 9: piping system 9 comprising pipe 5 having pipe flange 6, pipe flange mounting holes 7, and pipe flange mounting bolts 8.
- 10: reactor mounting holes 10
- 11: flange (PRIOR ART) 11
- 12: reactor (PRIOR ART) 12
- 13: flange mounting holes (PRIOR ART) 13
- 14: inner reactor wall 14
- 15: lamp maintenance access port 15 of reactor 1
- 16: irradiation cavity 16
- 17: second reactor 17
- 1A: reactor 1A in an alternative embodiment
- 2A: lamps 2A in an alternative embodiment
- 10A: reactor mounting holes 10A in an alternative embodiment
- 14A: inner reactor wall 14A in an alternative embodiment
- 16A: irradiation cavity 16A in an alternative embodiment
- 18A: lamp installation ports 18A in an alternative embodiment

### DETAILED DESCRIPTION

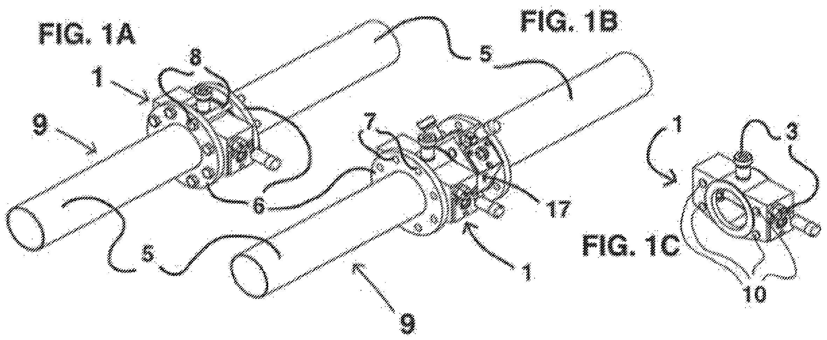

In the UV fluid treatment system of the present invention, reactor 1 has reactor mounting holes 10 adapted to be align-able (i.e. coaxial) with mounting holes 7 of a piping flange, substantially tubular irradiation cavity 16 having a longitudinal axis that is parallel to reactor mounting holes 10 and radiation source 2 (a.k.a "light source", "radiation source", e.g. a mercury vapor UV lamp) that is removably disposed within irradiation cavity 16; whereby the reactor can be removably secured between the flanges 6 of existing piping system 9 (e.g. FIG. 1A).

In one embodiment of the present invention, first and second reactors 1, 17 each have a plurality of mounting holes 10 adapted to be align-able with pipe flange mounting holes 7, substantially tubular irradiation cavity 16 having a longitudinal axis that is parallel to the plurality of mounting holes 10, and radiation source 2 that is removably disposed within irradiation cavity 16; whereby first and second reactors 1, 17 can be removably secured to each other, between flanges 6 of existing piping system 9, so that the irradiation cavities of the first and second reactors have a substantially common longitudinal axis; whereby the first and second reactors can be selectively arranged, relative to each other, in a plurality of positions around the substantially common longitudinal axis. In other words, the reactors can be rotated with respect to each other. This achieves at least one advantage of allowing greater flexibility to arrange lamps in various positions to alter the fluid irradiation profile.

The source 2 is elongated (e.g. a mercury vapor UV lamp) and has a longitudinal axis that is perpendicular to the longitudinal axis of irradiation cavity 16.

FIG. 1A depicts a perspective view of a single reactor 1 retrofitted into piping system 9 in accordance with the invention. Pipe flange mounting bolts 8 are inserted through reactor mounting holes 10 and pipe flange mounting holes 7. Reactor mounting holes 10 are coaxial with some of pipe flange mounting holes 7. Thus, reactor 1 can be rotated with respect to piping system 9 in multiple angles according to the location of pipe flange mounting holes 7.

FIG. 1B depicts a perspective view of multiple reactors 1, 17 retrofitted into piping system 9 in accordance with the invention. It is to be understood that multiple reactors can be placed adjacent to each other at various angles with respect to each other and held in place by pipe flange mounting bolts 8 in conjunction with pipe flanges 6.

Reactors 1, 17 can be made of the same types of materials commonly used in conventional UV water treatment reactors, or alternatively can be made of other materials having similar strength and structural characteristics, and can be manufactured by casting or machining. The various possible manufacturing options allow for greater cost advantages to be achieved.

Fluid flows in a direction parallel to the longitudinal axis of irradiation cavity 16. The irradiation cavity 16 is substantially tubular. It is to be understood that such a structure facilitates efficient fluid flow characteristics in accordance with known fluid dynamics.

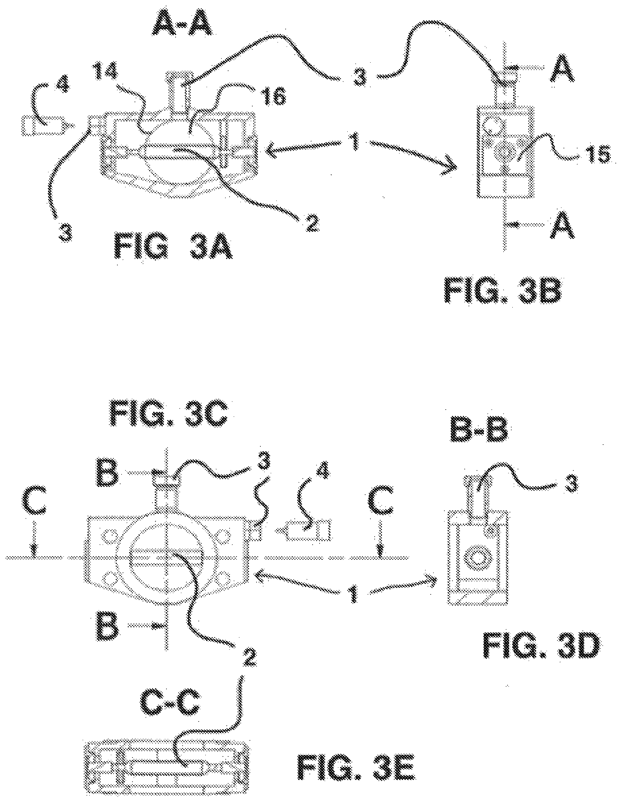

Radiation source 2 is removably disposed within irradiation cavity 16. In one embodiment (FIG. 3B), lamp maintenance access port 15 is removable to allow replacement and/or maintenance of lamp 2.

It is to be understood that the present invention can be adapted to fit different sized piping systems. In one embodiment (e.g. FIGS 3A - 3E), inner reactor wall 14 has a 10.16 cm (a 4 inch) diameter and a single lamp 2. However, other embodiments are possible. E.g. a 76.2 cm (a 30 inch) diameter and 10lamps.

Reactor mounting holes 10 preferably extend entirely through reactor 1 to allow pipe flange mounting bolts 8 to engage pipe flange mounting holes 7 on both sides of reactor 1, or alternatively, a plurality of cascaded reactors.

In one embodiment (e.g. FIG. 1B), mounting bolts 8 are of sufficient length so as to be inserted through the coaxial reactor mounting holes 10 and pipe flange mounting holes 7. FIG. 1B depicts two reactors cascaded, but it is to be understood that more than two reactors can be cascaded. Those of skill in the art will appreciate that mounting bolts 8 would have to be sized accordingly.

In one embodiment, first and second reactors 1, 17 are of the type depicted in FIGS. 3A - 3E. The irradiation cavities of the first and second reactors have a substantially common longitudinal axis that facilitates fluid (e.g. water) flow from piping system 9 through each of the reactors.

It is to be understood that ports 3 can be utilized for various purposes. E.g. in conjunction with an ancillary device 4 such as a UV sensor or wiper.

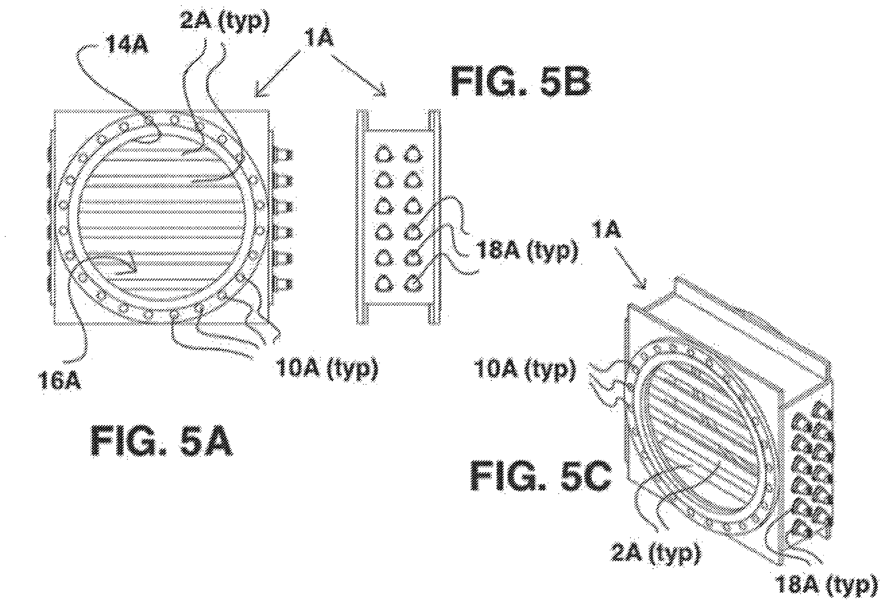

It is to be understood that various sizes of reactor 1 are possible. For example, in one embodiment (FIGS. 5A-5C), inner reactor wall 14A has a diameter of either 76.2 cm or 81.28 cm (30 or 32 inches).

Twelve lamps 2A are removably secured in lamp installation ports 18A. Reactor 1A is fabricated (i.e. not cast). Such an embodiment achieves significant space savings over conventional systems.

## Claims

1. A UV fluid treatment system comprising a UV reactor (1) and a piping system (5), the UV reactor configured for mounting between flanges (6) of the piping system, which reactor has no flanges and when mounted between flanges of the piping system, presents a tubular irradiation cavity (16) having a longitudinal axis, wherein the reactor comprises a plurality of mounting holes (10) adapted to be align-able coaxially with the mounting holes of a piping flange (7), the longitudinal axis of the irradiation cavity being parallel to the plurality of the mounting holes, and an elongated radiation source (2) which is removably disposed within the tubular irradiation cavity, wherein the radiation source longitudinal axis is perpendicular to the longitudinal axis of the tubular irradiation cavity, the system further comprising pipe flange mounting bolts (8), the arrangement being such that the pipe flange mounting bolts pass through the mounting holes of the flanges of the pipe system and the reactor such that the reactor can be rotated in multiple angles according to the location of the pipe flange mounting holes.

2. A UV fluid treatment system comprising a multiple reactor cascaded system configured for mounting between flanges of a piping system and comprising a first reactor according to claim 1 and at least a second reactor according to claim 1, whereby the first and second reactors are secured to each other by pipe flange mounting bolts passing through the aligned mounting holes in the pipe flanges and the reactors, between the flanges of an existing piping system, wherein the irradiation cavities of the first and second reactors have a common longitudinal axis; further whereby the first and second reactors can be selectively arranged, relative to each other, in a plurality of positions around the substantially common longitudinal axis.

## Patentansprüche

1. Ein UV-Fluidbehandlungssystem, das einen UV-Reaktor (1) and ein Rohrleitungssystem (5) beinhaltet, wobei der UV-Reaktor zur Montage zwischen Flanschen (6) des Rohrleitungssystems konfiguriert ist, wobei der Reaktor keine Flansche aufweist und, wenn er zwischen Flanschen des Rohrleitungssystems montiert ist, einen rohrförmigen Bestrahlungshohlraum (16) mit einer Längsachse aufweist, wobei der Reaktor eine Vielzahl von Montagelöchern (10) beinhaltet, die angepasst sind, um mit den Montagelöchern eines Rohrleitungsflansches (7) koaxial ausrichtbar zu sein, wobei die Längsachse des Bestrahlungshohlraums parallel zu der Vielzahl der Montagelöcher und einer länglichen Strahlungsquelle (2), die herausnehmbar innerhalb des röhrenförmigen Bestrahlungshohlraums eingerichtet ist, verläuft, wobei die Längsachse der Strahlungsquelle senkrecht zu der Längsachse des röhrenförmigen Bestrahlungshohlraums verläuft, wobei das System ferner Rohrflansch-Montagebolzen (8) beinhaltet, wobei die Anordnung so ist, dass die Rohrflansch-Montagebolzen durch die Montagelöcher der Flansche des Rohrsystems und des Reaktors hindurchgehen, sodass der Reaktor in mehreren Winkeln gemäß der Lage der Rohrflansch-Montagelöcher gedreht werden kann.

2. Ein UV-Fluidbehandlungssystem, das ein kaskadiertes Mehrfachreaktorsystem beinhaltet, das zur Montage zwischen Flanschen eines Rohrleitungssystems konfiguriert ist und einen ersten Reaktor gemäß Anspruch 1 und mindestens einen zweiten Reaktor gemäß Anspruch 1 beinhaltet, wobei der erste und der zweite Reaktor durch Rohrflansch-Montagebolzen, die durch die ausgerichteten Montagelöcher in den Rohrflanschen und den Reaktoren hindurchgehen, zwischen den Flanschen eines bestehenden Rohrleitungssystems aneinander befestigt sind, wobei die Bestrahlungshohlräume des ersten und des zweiten Reaktors eine gemeinsame Längsachse aufweisen; wobei der erste und der zweite Reaktor ferner relativ zueinander selektiv in einer Vielzahl von Positionen um die im Wesentlichen gemeinsame Längsachse herum angeordnet werden können.

## Revendications

1. Un système de traitement de fluide UV comprenant un réacteur UV (1) et un système de tuyauterie (5), le réacteur UV étant configuré pour se monter entre des brides (6) du système de tuyauterie, lequel réacteur n'a pas de brides et lorsqu'il est monté entre des brides du système de tuyauterie, présente une cavité d'irradiation tubulaire (16) ayant un axe longitudinal, dans lequel le réacteur comprend une pluralité de trous de montage (10) conçus pour être alignables coaxialement avec les trous de montage d'une bride de tuyauterie (7), l'axe longitudinal de la cavité d'irradiation étant parallèle à la pluralité des trous de montage, et une source de rayonnement allongée (2) qui est disposée au sein de la cavité d'irradiation tubulaire de manière à pouvoir être retirée, dans lequel l'axe longitudinal de source de rayonnement est perpendiculaire à l'axe longitudinal de la cavité d'irradiation tubulaire, le système comprenant en sus des boulons de montage de bride de tuyau (8), l'agencement étant tel que les boulons de montage de bride de tuyau passent à travers les trous de montage des brides du système de tuyau et du réacteur de telle sorte que le réacteur peut être tourné à de multiples angles selon l'emplacement des trous de montage de bride de tuyau.

2. Un système de traitement de fluide UV comprenant un système à multiples réacteurs en cascade configuré pour se monter entre des brides d'un système de tuyauterie et comprenant un premier réacteur selon la revendication 1 et au moins un deuxième réacteur selon la revendication 1, les premier et deuxième réacteurs étant assujettis l'un à l'autre par des boulons de montage de bride de tuyau qui passent à travers les trous de montage alignés dans les brides de tuyau et les réacteurs, entre les brides d'un système de tuyauterie existant, dans lequel les cavités d'irradiation des premier et deuxième réacteurs ont un axe longitudinal commun ; les premier et deuxième réacteurs pouvant en sus être agencés, l'un par rapport à l'autre, de manière sélective à une pluralité de positions autour de l'axe longitudinal substantiellement commun.
